# EUROPÄISCHE PATENTANMELDUNG

(11) **EP 0 927 925 A2**
(43) Veröffentlichungstag der Anmeldung: **07.07.1999**
(21) Anmeldenummer: 98122651.7
(22) Anmeldetag: 28.11.1998
(51) Int. Cl.: G06F 3/033

(54) **Berührungssensitiver Flachbildschirm für ein Kraftfahrzeug**

(30) Priorität: 04.12.1997 DE 19753742
(71) Anmelder: GRUNDIG Aktiengesellschaft, 90762 Fürth (DE)
(72) Erfinder: Hallas, Ernst Dr. GRUNDIG AG, 90762 Fürth (DE)

(57) **Zusammenfassung**

Die Erfindung betrifft eine Vorrichtung zur Eingabe von Bedienbefehlen bei einem elektronischen Gerät in einem Kraftfahrzeug, welches elektronische Gerät einen Flachbildschirm mit einer berührungssensitiven Bildschirmoberfläche als Anzeigeelement aufweist. Ein Bedienbefehl einer ersten Gruppe von Bedienbefehlen ist durch ein Berühren eines vorgegebenen Bereiches der Bildschirmoberfläche eingebbar. Ein Bedienbefehl einer zweiten Gruppe von Bedienbefehlen ist dadurch eingebbar, daß eine Bewegung eines Fingers entlang einer vorgegebenen Bahn auf der Bildschirmoberfläche durchgeführt wird.

## Beschreibung

Die Erfindung betrifft eine Vorrichtung zur Eingabe von Bedienbefehlen bei einem elektronischen Gerät in einem Kraftfahrzeug, welches elektronische Gerät einen Flachbildschirm mit einer berührungssensitiven Bildschirmoberfläche als Anzeigeelement aufweist, wobei ein Bedienbefehl einer ersten Gruppe von Bedienbefehlen durch ein Berühren eines vorgegebenen Bereiches der Bildschirmoberfläche eingebbar ist.

Es sind bereits elektronische Geräte bekannt, die einen Bildschirm mit einer berührungssensitiven Bildschirmoberfläche als Anzeigeelement aufweisen. Bei derartigen Geräten werden Bedienbefehle dadurch eingegeben, daß ein Benutzer mittels eines Fingers die Bildschirmoberfläche in einem vorgegebenen Bereich berührt, welcher dem jeweils einzugebenden Bedienbefehl zugeordnet ist. Die den einzelnen Bedienbefehlen zugeordneten Bereiche der Bildschirmoberfläche werden für den Benutzer dadurch kenntlich gemacht, daß im jeweiligen Bereich ein dem jeweiligen Bedienbefehl entsprechendes Symbol angezeigt wird. Zur Erkennung der Eingabe eines Bedienbefehls werden durch den Fingerdruck auf den jeweiligen Bildschirmbereich hervorgerufene Kapazitäts-, Induktivitäts- oder Druckveränderungen unter Verwendung entsprechender Sensoren ausgewertet. Die von den Sensoren abgeleiteten Signale werden der Steuerschaltung des jeweiligen Gerätes zugeführt, bei der es sich in der Regel um einen Mikrocomputer handelt. Dieser setzt die ihm zugeführten Signale in Stellsignale um, die der jeweils angesprochenen Baugruppe des Gerätes zur Ausführung des Bedienbefehls zugeführt werden.

Bedienbefehle, die bei bekannten Geräten auf diese Weise eingegeben werden können, sind beispielsweise Befehle zu einer Kanalumschaltung und zu einer Signalquellenauswahl.

Aus der DE-U1-9110348.7 ist aus dem technischen Gebiet der Maschinensteuerung bereits eine Schaltungsanordnung zur Eingabe von Steuerungsbefehlen bekannt. Bei dieser Anordnung ist ein berührungssensitiver Bildschirm vorgesehen, auf welchem durch ein Bewegen des Fingers entlang einer vorgegebenen Bahn Steuerbefehle zur Maschinenbedienung eingegeben werden können. Der jeweilige Befehl wird erst dann ausgelöst, wenn eine Bestätigungstaste gedrückt wird.

Schließlich ist aus der JP 09-33278 A eine Anzeigevorrichtung zum Betreiben eines Gerätes an Bord eines Fahrzeugs bekannt, die sämtliche Merkmale des Oberbegriffs des Anspruchs 1 aufweist. Diese wird bei einer Navigationsanlage verwendet und weist als Eingabeeinrichtung ein auf dem Bildschirm der Anzeigevorrichtung aufgebrachtes Berührungstablett auf. Weiterhin ist bei der bekannten Vorrichtung eine Berührungsarten-Erkennungseinrichtung vorgesehen, welche die Berührungsarten des Fingers auf dem Berührungstablett erkennt. Insbesondere wird die Berührungsposition, die Berührungsdauer und die Berührungshäufigkeit des Fingers auf dem Berührungstablett ausgewertet. Weiterhin weist die bekannte Vorrichtung Mittel auf, die ein Führen des Fingers auf dem Bildschirm auf einer dort dargestellten Straße erkennt und zur Identifizierung dieser Straße verwendet. Aus geräteinternen Speichern können dann Stauinformationen abgerufen werden, die zu der identifizierten Straße gehören. Alternativ dazu kann auch der Name dieser Straße angezeigt werden.

Ausgehend von diesem Stand der Technik liegt der Erfindung die Aufgabe zugrunde, eine Vorrichtung zur Eingabe von Bedienbefehlen mit den im Oberbegriff des Anspruchs 1 angegebenen Merkmalen derart weiterzubilden, daß die Möglichkeiten, Bedienbefehle einzugeben, erweitert sind.

Diese Aufgabe wird bei einer Vorrichtung mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung ergeben sich aus den abhängigen Patentansprüchen.

Die Vorteile der Erfindung bestehen insbesondere darin, daß mittels der beanspruchten Vorrichtung Bedienbefehle, die bei bekannten elektronischen Geräten unter Verwendung von Drehknöpfen oder Wipptasten eingegeben werden, nunmehr durch eine Bewegung des Fingers auf der Bildschirmoberfläche eingegeben werden können. Weiterhin können mittels der Erfindung auch Bedienbefehle, die bei bekannten Geräten mittels eines Cursors oder einer Maus eingegeben werden, nunmehr durch eine Bewegung des Fingers auf der Bildschirmoberfläche eingegeben werden.

Mittels der im Anspruch 3 angegebenen Merkmale wird erreicht, daß in einer ersten Bedienbetriebsart ein Bedienbefehl eingebbar ist, mittels dessen dem Gerät mitgeteilt wird, welche Gerätefunktion angesprochen werden soll. Handelt es sich bei dieser Gerätefunktion beispielsweise um die Lautstärke, dann wird als Reaktion auf den eingegebenen Bedienbefehl vom Mikrocomputer des Gerätes eine Umschaltung ausgelöst, durch die das Gerät in die zweite Bedienbetriebsart gebracht wird. In dieser zweiten Bedienbetriebsart wird auf dem Bildschirm eine vorgegebene Bahn angezeigt, entlang derer der Finger des Benutzers zu bewegen ist, um eine Veränderung der Lautstärke zu bewerkstelligen. Bei dieser Bahn kann es sich um eine kreissegmentförmige Bahn, um eine kreisförmige Bahn oder um eine linienförmige Bahn handeln.

Um die Eingabesicherheit zu erhöhen, kann in vorteilhafter Weise - wie es im Anspruch 4 angegeben ist - in der ersten Bedienbetriebsart ein Bedienbefehl, mittels dessen die zu beeinflussende Gerätefunktion spezifiziert wird, durch zweifaches Berühren eines vorgegebenen Bereiches der Bildschirmoberfläche eingegeben werden. Dadurch wird erreicht, daß bei einem versehentlichen Berühren der Bildschirmobenfläche keine unerwünschten Funktionen ausgelöst werden.

Gemäß den Ansprüchen 5 bis 6 handelt es sich bei dem elektronischen Gerät um ein Navigationsgerät. Bei einem solchen kann die Erfindung in vorteilhafter Weise dazu verwendet werden, Buchstaben des Alphabets einzugeben, um einen Städtenamen zusammenzusetzen. Bei diesem Städtenamen kann es sich um einen gewünschten Zielort handeln. Der Mikrocomputer des Gerätes ermittelt dann unter Verwendung von abgespeichertem digitalen Kartenmaterial die günstigste Fahrtstrecke und signalisiert diese dem Benutzer durch die Anzeige einer Kartendarstellung auf dem Bildschirm, wobei in dieser Anzeige der momentane Standort und die günstigste Fahrtstrecke markiert sind. Möchte der Benutzer den angezeigten Kartenausschnitt verändern, dann kann er dies - wie im Anspruch 6 angegeben - in einfacher Weise dadurch bewerkstelligen, daß er durch eine Bewegung eines Fingers auf der Bildschirmoberfläche ausgehend von dem dem momentanen Fahrzeugstandort entsprechenden Bereich der Bildschirmoberfläche in eine gewünschte Richtung den Kartenausschnitt verschiebt.

Gemäß dem Anspruch 7 handelt es sich bei dem elektronischen Gerät um ein Kraftfahrzeug-Fernsehgerät oder ein Autoradiogerät.

Mit den im Anspruch 8 angegebenen Merkmalen wird erreicht, daß die bei einer 4:3-Bilddarstellung freien Randbereiche des Bildschirms dazu genutzt werden, die Anzahl der eingebbaren Bedienbefehle zu vergrößern.

Mittels der im Anspruch 10 angegebenen Merkmale wird erreicht, daß der Flachbildschirm an einer Stelle im Kraftfahrzeug plaziert werden kann, an der er vom Benutzer besonders gut einsehbar ist, beispielsweise auf der Oberseite des Armaturenbretts. Ein weiterer Vorteil bestehen darin, daß der Flachbildschirm schnell und einfach ausgebaut und wieder eingesetzt werden kann. Dies erleichtert eventuelle Reparaturarbeiten und ermöglicht ein einfaches Ersetzen eines bereits eingebauten Flachbildschirms durch einen neuen Flachbildschirm, der beispielsweise eine größere Bildschirmdiagonale aufweist.

Die im Anspruch 11 angegebenen Merkmale führen zu einer übersichtlichen und verständlichen Bedienbarkeit des Gerätes, da die Anzahl der in einem Bedienungsschritt eingebbaren Bedienfunktionen beschränkt ist.

Weitere vorteilhafte Eigenschaften der Erfindung ergeben sich aus der Erläuterung von Ausführungsbeispielen anhand der Figuren.

Es zeigt
- **FIG 1**: Bildschirmdarstellungen zur Veranschaulichung der Arbeitsweise einer Vorrichtung gemäß der Erfindung bei einem Autoradio,
- **FIG 2**: Bildschirmdarstellungen, wie sie im Zusammenhang mit der Anwendung der Erfindung bei einem Fernsehempfänger auftreten, und
- **FIG 3**: Bildschirmdarstellungen, wie sie im Zusammenhang mit der Anwendung der Erfindung bei einem Navigationsgerät auftreten.

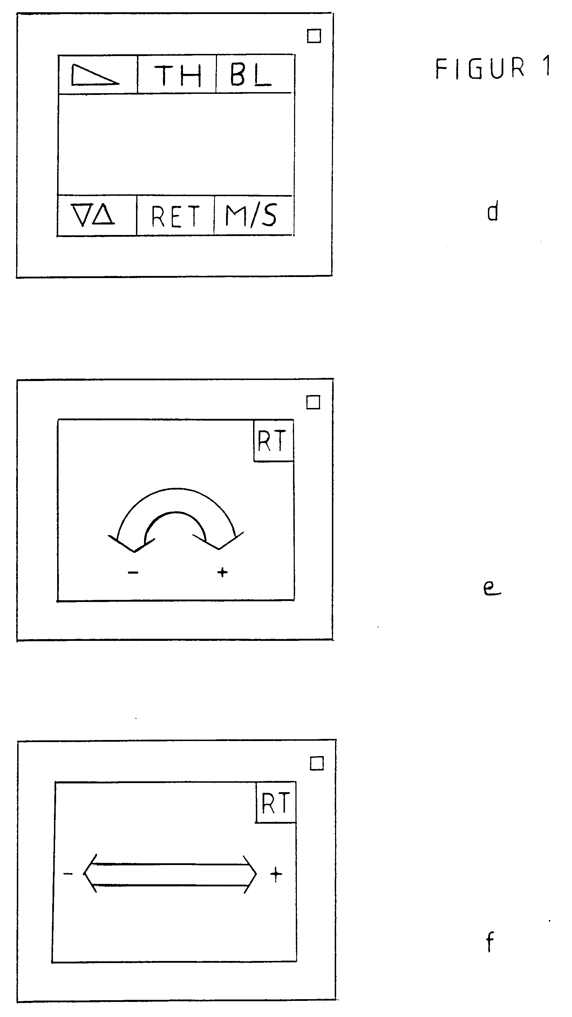

Die FIG 1 zeigt Bildschirmdarstellungen zur Veranschaulichung der Arbeitsweise einer Vorrichtung gemäß der Erfindung bei einem Autoradio. Dieses Autoradio ist in den Autoradioeinbauraum eines Kraftfahrzeugs eingebaut. In der FIG 1a ist die Vorderseite des Autoradios dargestellt, welche einen Frontrahmen 1 und einen LCD-Flachbildschirm 2 aufweist. Bei diesem LCD-Flachbildschirm 2 handelt es sich um einen Bildschirm mit berührungssensitiver Oberfläche. Dieser Bildschirm ist sowohl zur Eingabe von Bedienbefehlen als auch zur Wiedergabe von Signalen vorgesehen. Im Bereich des Frontrahmens 1 ist ein Ein- und Ausschaltknopf 3 vorgesehen, mittels dessen das Autoradio ein- und ausgeschaltet werden kann.

Wird das Autoradio mittels des Knopfes 3 eingeschaltet, dann wird auf dem Bildschirm unter Steuerung durch den Mikrocomputer des Autoradios eine erste Menuedarstellung bzw. eine erste Menueseite dargestellt. Die zu dieser Menuedarstellung notwendigen Daten sind ebenso wie die Daten weiterer Menueseiten in einem Speicher des Autoradios abgelegt und werden vom Mikrocomputer als Reaktion auf die Einschaltung des Gerätes ausgelesen. Diese erste Menueseite ist derart aufgebaut, daß im oberen und im unteren Bereich der Bildschirmoberfläche jeweils eine Eingabezeile erzeugt wird. Jede dieser Eingabezeilen ist in vorgegebene Bereiche aufgeteilt, welche in der FIG 1b mit den Bezeichnungen R, TV, CD, CAS und NAV versehen sind.

Der Benutzer hat nun die Möglichkeit, durch ein Berühren eines dieser Bereiche der Bildschirmoberfläche den Radiobetrieb, den Fernsehbetrieb, den CD-Betrieb, den Kassettenbetrieb oder den Navigationsbetrieb auszuwählen.

Berührt er beispielsweise den Bereich der Bildschirmoberfläche, der mit dem Buchstaben R versehen ist, dann wird durch dieses Berühren der Bildschirmoberfläche ebenso wie bei bekannten berührungssensitiven Bildschirmen eine Kapazitäts-, Induktivitäts- oder Druckveränderung hervorgerufen, die von zugehörigen Sensoren detektiert wird. Die von den Sensoren abgeleiteten Signale werden dem Mikrocomputer zugeführt, der die Sensorsignale auswertet und in Abhängigkeit von seiner Programmierung die jeweils erforderlichen Schritte in die Wege leitet.

Diese bestehen im vorliegenden Fall darin, daß aus dem genannten Speicher die Daten einer weiteren Menuedarstellung ausgelesen und auf dem Bildschirm dargestellt werden. Dies ist in der FIG 1c gezeigt. In den auf dem Bildschirm dargestellten Eingabezeilen sind insgesamt 12 vorgegebene Bereiche vorgesehen, die mit den Zahlen 1 bis 12 bezeichnet sind. Der Benutzer hat nun die Möglichkeit, durch ein Berühren eines gewünschten dieser Bereiche eine Kanalwahl zu treffen.

Diese Kanalwahl wird vom Mikrocomputer durch eine Auswertung der Sensorausgangssignale erkannt. Der Mikrocomputer erzeugt dann in Abhängigkeit von den Sensorausgangssignalen Steuersignale für den Tuner des Autoradios, der dadurch auf den gewünschten Rundfunkkanal abgestimmt wird. Die vom Tunerausgang abgeleiteten Signale werden über im Kraftfahrzeug vorgesehene Lautsprecher wiedergegeben.

Weiterhin liest der Mikrocomputer aus dem genannten Speicher die Daten einer weiteren Menuedarstellung aus und stellt die zugehörige Menueseite, die in der FIG 1d gezeigt ist, auf dem Bildschirm dar. Die beiden auf dieser Menueseite gezeigten Eingabezeilen weisen insgesamt 6 vorgegebene Bereiche auf, um dem Benutzer die Möglichkeit zu geben, einen Bedienbefehl einzugeben, mittels dessen eine Lautstärkeveränderung, eine Tonhöhenveränderung, eine Balanceveränderung, eine Überblendreglerveränderung, eine Rückkehr auf die vorherige Menueseite oder eine Stereo/Mono-Umschaltung einleitbar ist.

Berührt der Benutzer den der Lautstärkeveränderung zugehörigen Bereich der Bildschirmoberfläche, dann adressiert der Mikrocomputer den Speicher derart, daß eine weitere Menuedarstellung auf dem Bildschirm dargestellt wird, die in der FIG 1e gezeigt ist. In dieser Menuedarstellung ist eine kreissegmentförmige Bahn gezeigt, wobei im Bereich der beiden Enden dieser Bahn ein Plus- und ein Minuszeichen dargestellt ist, um dem Benutzer zu signalisieren, daß durch eine Bewegung des Fingers auf der kreissegmentförmigen Bahn in Richtung des Uhrzeigersinns die Lautstärke erhöht und durch eine Bewegung des Fingers entgegen der Richtung des Uhrzeigersinns die Lautstärke vermindert werden kann. Weiterhin ist im oberen rechten Eckbereich des Displays ein Bereich gezeigt, bei dessen Berühren auf die vorher dargestellte Menueseite zurückgekehrt werden kann.

Bewegt der Benutzer zu einer Veränderung der Lautstärke seinen Finger auf der dargestellten Bahn, dann wird diese Bewegung vom Mikrocomputer durch Auswertung der ihm von den Sensoren zugeführten Signale erkannt und in Stellsignale für die zugehörigen Stellelemente des Autoradios umgesetzt, mittels derer die Lautstärke verändert wird.

Die FIG 1f zeigt eine alternative Ausführungsform, bei der eine Lautstärkeveränderung durch eine Bewegung eines Fingers auf einer linienförmigen Bahn durchgeführt werden kann.

Alternativ dazu kann die vorgegebene Bahn auch kreisförmig verlaufen.

Aus der vorstehenden Beschreibung ergibt sich, daß bei einer Vorrichtung gemäß der Erfindung zwei Gruppen von Bedienbefehlen existent sind, wobei jeder Bedienbefehl aus der ersten Gruppe von Bedienbefehlen durch ein Berühren eines vorgegebenen Bereiches der Bildschirmoberfläche eingegeben wird und wobei jeder Bedienbefehl aus der zweiten Gruppe von Bedienbefehlen durch ein Bewegen des Fingers entlang einer vorgegebenen Bahn auf der Bildschirmoberfläche eingebbar ist. Bedienbefehle aus der zweiten Gruppe von Bedienbefehlen sind insbesondere Bedienbefehle, die bei bekannten Rundfunkgeräten unter Verwendung von Drehknöpfen oder Wipptasten eingegeben werden, d. h. die sogenannten Analogfunktionen von Rundfunkgeräten.

Weiterhin ergibt sich aus der vorstehenden Beschreibung, daß die vorgegebenen Bereiche bei jeder Menuedarstellung in gewünschter Weise neu definiert werden. Sie können sich von vorgegebenen Bereichen in anderen Menuedarstellungen sowohl in Bezug auf die Größe der Bereiche als auch in Bezug auf die Form der Bereiche als auch in Bezug auf die Position der Bereiche auf der Bildschirmoberfläche unterscheiden. Die einzelnen Bereiche können ferner auch innerhalb ein und derselben Menuedarstellung unterschiedlich groß sein und sich auch an beliebigen Stellen des Bildschirms befinden.

Gemäß einer vorteilhaften Weiterbildung der Erfindung wird ein Bedienbefehl der ersten Gruppe von Bedienbefehlen durch ein zweimaliges bzw. zweifaches Berühren des jeweiligen vorgegebenen Bereiches der Bildschirmoberfläche eingegeben. Dies hat den Vorteil, daß ein versehentliches Berühren der Bildschirmoberfläche nicht sofort zu Fehleingaben bzw. unerwünschten Gerätezuständen führt.

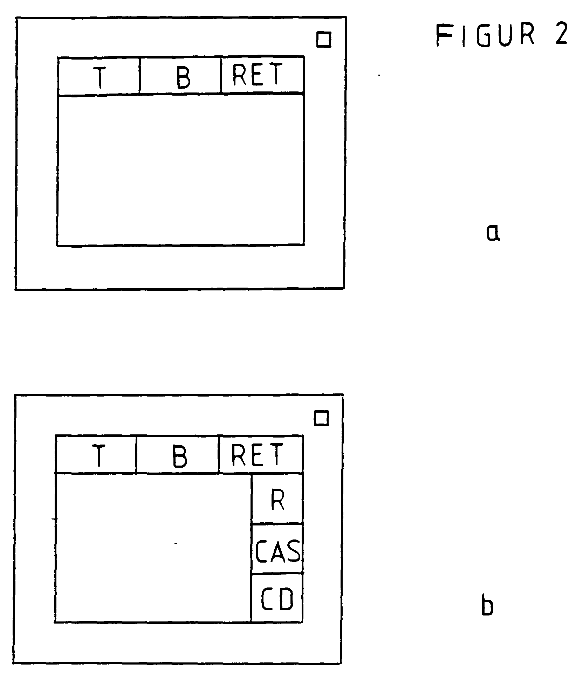

In der FIG 2 sind Bildschirmdarstellungen gezeigt, wie sie im Zusammenhang mit der Anwendung der Erfindung bei einem Fernsehempfänger auftreten können.

Bei der Darstellung gemäß FIG 2a ist im oberen Bereich des Bildschirms eine Eingabezeile gezeigt, die drei vorgegebene Bereiche aufweist. Diese Bereiche sind mit T, B und RET bezeichnet. Durch ein Berühren des Bereiches T ist ein Bedienbefehl eingebbar, mittels dessen dem Mikrocomputer signalisiert wird, daß der Benutzer im nächsten Bedienschritt eine Veränderung im Zusammenhang mit der derzeitigen Einstellung der Tonsignalparameter vornehmen möchte. Bei einem Berühren des Bereiches B erkennt der Mikrocomputer, daß eine Veränderung bezüglich der Bildsignalparameter gewünscht ist. Ferner ist ein mit RET bezeichneter Bereich vorgesehen, bei dessen Berühren eine Rückkehr auf eine vorher angezeigte Menuedarstellung erfolgt.

Der für die Darstellung des Bildsignals zur Verfügung stehende Bereich des Bildschirms hat ein Bildseitenverhältnis von 16:9. In diesem Bildschirmbereich kann ein Fernsehsignal angezeigt werden, welches in einem Fernsehsender erzeugt und von der Antenne des Auto-Fernsehgerätes empfangen wurde. Dieses Fernsehsignal hat in seiner vertikalen Austastlücke ein eingesetztes Kennsignal für das Bildseitenverhältnis des Fernsehsignals, welches 16:9 ist. Dieses Kennsignal wird vom Mikrocomputer des Empfängers ausgewertet und dazu verwendet, aus dem Speicher eine dort abgespeicherte Menuedarstellung auszulesen, die auf dem Bildschirm die Anzeige eines 16:9-Bildes ermöglicht, ohne daß Bildbereiche abgeschnitten werden müssen und ohne daß Dunkelbildschirmbereiche vorhanden sind.

Erfolgt nun im Fernsehsender ein Übergang von einer Fernsehsendung mit 16:9-Bildern zu einer neuen Fernsehsendung mit Bildern, die ein Bildseitenverhältnis von 4:3 aufweisen, dann wird in die vertikalen Austastlücken ein anderes Kennsignal eingesetzt, welches die neue Fernsehsendung als 4:3-Sendung charakterisiert. Dieses Kennsignal wird vom Mikrocomputer des Empfängers ausgewertet und dazu verwendet, aus dem Speicher eine dort abgespeicherte Menuedarstellung auszulesen, die auf dem Bildschirm die Anzeige eines 4:3-Bildes ermöglicht, ohne daß dunkle Bildschirmbereiche vorhanden sind. Der bei der Darstellung eines 4:3-Bildes freie Bereich auf der rechten Seite des Bildes wird in vorteilhafter Weise dazu verwendet, zusätzlich Bereiche zur Eingabe von Bedienbefehlen vorzugeben.

Dies ist in der FIG 2b gezeigt. Dort sind rechts neben dem 4:3-Bild drei Bereiche gezeigt, die mit R, CAS und CD bezeichnet sind. Dadurch wird dem Benutzer die Möglichkeit gegeben, während der Wiedergabe eines 4:3-Fernsehbildes durch eine Berührung eines der zusätzlichen Bereiche eine Signalquellenumschaltung vorzunehmen. Bei der Darstellung gemäß FIG 2a wäre dies erst möglich, wenn der Benutzer durch ein ein- oder mehrmaliges Betätigen der RET-Taste auf eine vorhergehende Menueseite zurückgeschaltet hätte. Der genannte zusätzliche Bereich kann in vorteilhafter Weise auch dazu verwendet werden, eine oder mehrere Bahnen auf der Bildschirmoberfläche vorzugeben, entlang derer der Finger des Benutzers zu führen ist, um eine der Analogfunktionen des Fernsehempfängers zu verstellen.

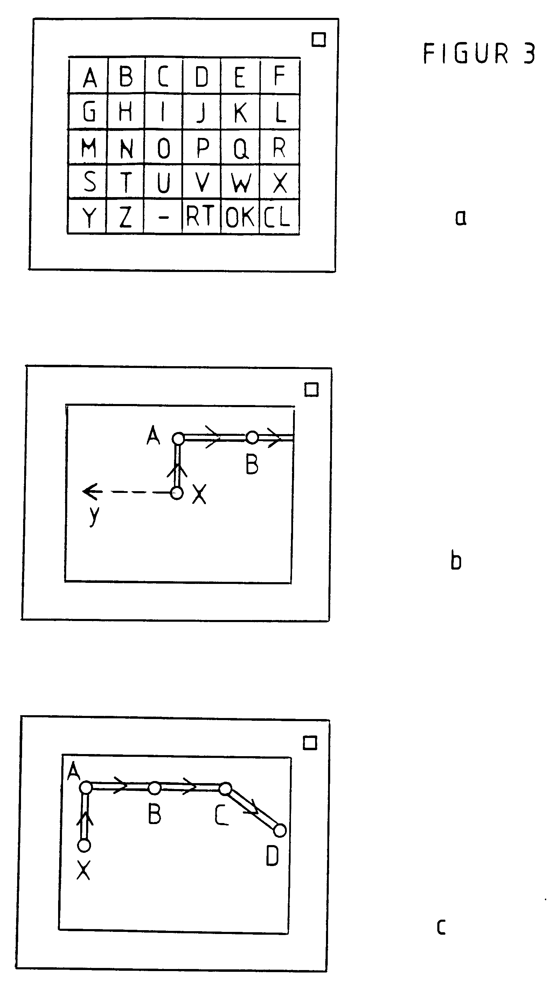

In der FIG 3 sind Bildschirmdarstellungen gezeigt, wie sie im Zusammenhang mit der Anwendung der Erfindung bei einem Navigationsgerät auftreten. Bei diesem Navigationsgerät kann es sich um ein separates elektronisches Gerät, um eine mit einem Autoradio in ein gemeinsames Gehäuse integrierte Baugruppe oder auch um eine Baugruppe handeln, die zur Bildung eines Multifunktionsgerätes mit einem Autoradioempfangsteil, einem Fernsehempfangsteil und weiteren Signalquellen kombiniert ist.

Bei einem derartigen Navigationsgerät besteht beim Fahrtantritt die Notwendigkeit, den Namen des Zielortes einzugeben. Zu diesem Zweck wird als Reaktion auf einen zugeführten Bedienbefehl vom Mikrocomputer aus dem Speicher eine Menüdarstellung ausgelesen und auf dem Bildschirm dargestellt, wie sie in der FIG 3a gezeigt ist. Diese Menüdarstellung enthält unter anderem 26 vorgegebene Bereiche, die den Buchstaben des Alphabets entsprechen. Die Eingabe des Namens des Zielortes erfolgt nun dadurch, daß der Benutzer durch ein aufeinanderfolgendes Berühren der jeweiligen Bildschirmbereiche die einzelnen Buchstaben des Namens eingibt und durch ein Berühren des OK-Bereiches der Bildschirmoberfläche die Eingabe bestätigt.

Vertippt sich der Benutzer während der Eingabe, dann kann er durch ein Berühren des CL-Bildschirmbereiches die bisher eingegebenen Buchstaben löschen und von Neuem mit der Eingabe des Zielortnamens beginnen.

Weiterhin enthält die in der FIG 3a gezeigte Menüdarstellung einen Bereich, durch dessen Berühren ein Bindestrich eingegeben werden kann, und einen Bereich RT, bei dessen Berühren auf eine vorherigen Menüseite zurückgesprungen werden kann.

Ist der Name des Zielortes auf die beschriebenen Weise eingegeben, dann ermittelt der Mikrocomputer unter Verwendung von abgespeichertem digitalen Kartenmaterial und unter Auswertung des momentanen Standortes, der von einem GPS-Empfänger abgeleitet ist, die günstigste Fahrtstrecke zum Zielort. Weiterhin generiert er die Bildschirmanzeige eines Kartenausschnittes, in welchem der momentane Standort des Fahrzeugs und die Fahrtstrecke angegeben sind.

Ein Beispiel für eine derartige Anzeige ist in der FIG 3b gezeigt. Dabei ist mit dem Buchstaben X der momentane Standort, mit dem Buchstaben A der nächste anzufahrende Ort, mit dem Buchstaben B der übernächste Ort und mit den Pfeilen die Fahrtrichtung gekennzeichnet.
Möchte der Benutzer nun den angezeigten Kartenausschnitt auf dem Display verschieben, um Auskünfte über den weiteren Verlauf der vorgeschlagenen Fahrtstrecke zu erhalten, dann kann er dies dadurch bewerkstelligen, daß er den Finger auf einen Bereich der Bildschirmoberfläche auflegt, der dem momentanen Fahrzeugstandort entspricht und diesen Finger auf der Bildschirmoberfläche in Richtung des gestrichelt gezeichneten Pfeiles y bewegt.

Die aufgrund dieser Bewegung des Fingers auf der Bildschirmoberfläche hervorgerufene Bildschirmanzeige ist in der FIG 3c gezeigt. In dieser Bildschirmanzeige sind außer dem momentanen Standort X und den Orten A und B auch die im weiteren Streckenverlauf liegenden Orte C und D dargestellt.

Bei einer Vorrichtung gemäß der Erfindung kann der Bildschirm nicht nur, wie in den Figuren dargestellt, auf die Vorderseite des jeweiligen elektronischen Gerätes aufgesetzt sein. Er kann auch ein separates Bauteil sein, welches mit dem elektronischen Gerät entweder über ein Verbindungskabel oder über eine optische Übertragungsstrecke verbunden ist, beispielsweise über eine Infrarot-Übertragungsstrecke. Dies hat den Vorteil, daß der Bildschirm im Kraftfahrzeug an einer für den Fahrer besonders gut einsehbaren Stelle positioniert werden kann, beispielsweise im oberen Bereich oder auf der Oberseite des Armaturenbrettes. Er ist an der gewünschten Stelle vorzugsweise an einem Gegenstück mittels einer Steckverbindung befestigt, die sowohl eine schnelle und einfache Befestigung als auch ein schnelles und einfaches Entfernen des Bildschirms ermöglicht. Bei einer Befestigung des Bildschirms am Gegenstück wird automatisch eine Verbindung des Flachbildschirms mit der Versorgungsquelle und einer Signalquelle hergestellt, so daß der Benutzer zur Inbetriebnahme des Flachbildschirms lediglich die Steckverbindung herstellen muß. Weiterhin wird nach der Befestigung des Bildschirms am Gegenstück unter Steuerung durch den Mikrocomputer ein automatischer Selbsttest auf Funktionsfähigkeit durchgeführt und das Ergebnis dem Benutzer optisch oder akustisch signalisiert.

Mittels der Erfindung wird nach alledem eine Vorrichtung zur Eingabe von Bedienbefehlen geschaffen, die vom Benutzer einfach bedient werden kann. Durch die Bereitstellung berührungssensitiver Bereiche auf der Oberfläche eines LCD-Bildschirms wird erreicht, daß die Vorderseite des jeweiligen elektronischen Gerätes nicht mit gesonderten Bedientasten wie Druckknöpfen, Wipptasten und Drehknöpfen versehen sein muß. Dies ermöglicht, die Bildschrimdiagonale des LCD-Bildschirms entsprechend größer zu wählen, so daß die anzuzeigenden Bilddinhalte, bei denen es sich beispielsweise um Radiotextanzeigen, Sendernamensanzeigen, Fernsehbildanzeigen oder Kartendarstellungen handeln kann, vom Benutzer besser erkennbar sind.

## Patentansprüche

1. Vorrichtung zur Eingabe von Bedienbefehlen bei einem elektronischen Gerät in einem Kraftfahrzeug, welches elektronische Gerät einen Flachbildschirm mit einer berührungssensitiven Bildschirmoberfläche als Anzeigeelement aufweist, wobei ein Bedienbefehl einer ersten Gruppe von Bedienbefehlen durch ein Berühren eines vorgegebenen Bereiches der Bildschirmoberfläche eingebbar ist, und ein Bedienbefehl einer zweiten Gruppe von Bedienbefehlen durch eine Bewegung eines Fingers entlang einer vorgegebenen Bahn auf der Bildschirmoberfläche eingebbar ist,
**dadurch gekennzeichnet, daß**
durch die Bewegung des Fingers entlang der vorgegebenen Bahn auf der Bildschirmoberfläche ein Befehl eingebbar ist, mittels dessen die Lautstärke, die Klangfarbe, der Überblendregler, die Tonhöhe, die Bildhelligkeit oder der Bildkontrast verändert wird.

2. Vorrichtung nach Anspruch 1,
**dadurch gekennzeichnet, daß**
die vorgegebene Bahn auf der Bildschirmoberfläche eine kreissegmentförmige und/oder kreisförmige Bahn und/oder eine linienförmige Bahn ist.

3. Vorrichtung nach einem der vorhergehenden Ansprüche,
**dadurch gekennzeichnet, daß**
sie in einer ersten Bedienbetriebsart betreibbar ist, in der ein Bedienbefehl der ersten Gruppe von Bedienbefehlen eingebbar ist, und daß der Mikrocomputer als Reaktion auf die Eingabe eines Bedienbefehls der ersten Gruppe von Bedienbefehlen eine Umschaltung auf die zweite Bedienbetriebsart auslöst, bei der ein Bedienbefehl der zweiten Gruppe von Bedienbefehlen durch eine Bewegung eines Fingers entlang einer vorgegebenen Bahn auf der Bildschirmoberfläche eingebbar ist.

4. Vorrichtung nach einem der vorhergehenden Ansprüche,
**dadurch gekennzeichnet, daß**
ein Bedienbefehl der ersten Gruppe von Bedienbefehlen durch ein zweifaches Berühren eines vorgegebenen Bereiches der Bildschirmoberfläche eingebbar ist.

5. Vorrichtung nach einem der vorhergehenden Ansprüche,
**dadurch gekennzeichnet, daß**
der Flachbildschirm eine LCD-Bildschirm ist und das elektronische Gerät ein Navigationsgerät ist.

6. Vorrichtung nach Anspruch 5,
**dadurch gekennzeichnet, daß**
vorgegebene Bereiche der Bildschirmoberfläche den Buchstaben des Alphabets zugeordnet sind und daß durch ein Berühren bestimmter Bereiche der Name eines Zielortes eingebbar ist und/oder auf dem Bildschirm eine Kartendarstellung anzeigbar ist, in der der momentane Fahrzeugstandort markiert ist, und daß durch eine Bewegung eines Fingers auf der Bildschirmoberfläche ausgehend von dem dem momentanen Fahrzeugstandort entsprechenden Bereich der Bildschirmoberfläche in eine gewünschte Richtung der Kartenausschnitt verschiebbar ist.

7. Vorrichtung nach einem der vorhergehenden Ansprüche,
**dadurch gekennzeichnet, daß**
das elektronische Gerät ein Kraftfahrzeug-Fernsehgerät oder ein Autoradiogerät ist.

8. Vorrichtung nach einem der vorhergehenden Ansprüche,
**dadurch gekennzeichnet, daß**
auf dem Bildschirm Fernsehsignale mit einem Bildseitenverhältnis von 16:9 und einem Bildseitenverhältnis von 4:3 alternativ darstellbar sind und daß die bei einer Darstellung von Fernsehsignalen mit einem Bildseitenverhältnis von 4:3 freien Seitenbereiche zur Eingabe von Bedienbefehlen vorgesehen sind.

9. Vorrichtung nach einem der vorhergehenden Ansprüche,
**dadurch gekennzeichnet, daß**
die Eingabe von Bedienbefehlen unter Verwendung von Sensoren erfolgt, die Kapazitäts-, Induktivitäts- oder Druckveränderungen auswerten.

10. Vorrichtung nach einem der vorhergehenden Ansprüche,
**dadurch gekennzeichnet, daß**
der Flachbildschirm auf die Vorderseite des elektronischen Gerätes aufgesetzt ist und/oder der Flachbildschirm ein separates Bauteil ist, welches mit dem elektronischen Gerät über ein Signalübertragungsmedium verbunden ist und daß das Signalübertragungsmedium ein Verbindungskabel oder eine optische Übertragungsstrecke ist und/oder der Flachbildschirm an einem Gegenstück mittels einer Steckverbindung befestigbar ist und daß durch die Befestigung des Flachbildschirms am Gegenstück automatisch eine Verbindung des Flachbildschirms mit einer Versorgungsquelle und einer Signalquelle erfolgt und nach der Befestigung des Flachbildschirms am Gegenstück ein automatischer Selbsttest auf Funktionsfähigkeit erfolgt.

11. Vorrichtung nach einem der vorhergehenden Ansprüche,
**dadurch gekennzeichnet, daß**
das elektronische Gerät einen Speicher aufweist, in welchem Daten abgespeichert sind, die einer Vielzahl von auf dem Bildschirm anzeigbaren Menueseiten entsprechen und daß die Menueseiten jeweils Symbole aufweisen, die einzugebenden Bedienbefehlen entsprechen und/oder eine Umschaltung von einer auf dem Bildschirm angezeigten ersten Menueseite auf eine auf dem Bildschirm angezeigte zweite Menueseite durch ein Berühren eines vorgegebenen Bereiches der Bildschirmoberfläche während der Anzeige der ersten Menueseite auslösbar ist und/oder eine Rückschaltung von der auf dem Bildschirm angezeigten zweiten Menueseite auf die erste Menueseite durch ein Berühren eines vorgegebenen Bereiches der Bildschirmoberfläche während der Anzeige der zweiten Menueseite auslösbar ist.
